# EUROPEAN PATENT APPLICATION

(11) **EP 4 707 755 A1**
(43) Date of publication of application: **11.03.2026**
(21) Application number: 24926567.9
(22) Date of filing: 29.05.2024
(51) Int. Cl.: G01F 23/00, B01F 35/221, E01C 19/10

(54) **MATERIAL LEVEL MEASUREMENT METHOD, MATERIAL LEVEL MEASUREMENT CONTROL DEVICE, AND ASPHALT MIXING PLANT**

(30) Priority: 29.02.2024 CN 202410230871
(71) Applicant: Changde Sany Machinery Co., Ltd., Changde, Hunan 415000 (CN)
(72) Inventor: LUO, Hongyuan, Changde, Hunan 415000 (CN); LEI, Lintao, Changde, Hunan 415000 (CN)
(74) Representative: Murgitroyd & Company
(86) International application number: PCT/CN2024/095912
(87) International publication number: WO 2025/179696

(57) **Abstract**

Disclosed are a material level measurement method, a material level measurement control device, and an asphalt mixing plant. The material level measurement method includes: determining, based on a respective feeding amounts of n cold feed bins (100), a consumption amount of a hot aggregate in a certain hot aggregate bin (200), and a measured value of a remaining amount of the hot aggregate in the certain hot aggregate bin (200) within a first preset time, a proportion of material input from the n cold feed bins (100) into the certain hot aggregate bin (200); and determining, based on a respective feeding amounts of the n cold feed bins (100), a consumption amount of the hot aggregate in the certain hot aggregate bin (200), and the proportion of the material within a second preset time, an actual value of the remaining amount of the hot aggregate in the certain hot aggregate bin (200). Thus, the material level of the hot aggregate bin 200 can be measured in real-time, and an accuracy and precision of the material level measurement of the hot aggregate bin 200 are greatly improved.

## Description

### TECHNICAL FIELD

The present invention relates to the field of asphalt production technologies, and in particular, to a material level measurement method, a material level measurement device, and an asphalt mixing plant.

### BACKGROUND

An asphalt mixing plant, also known as an asphalt concrete mixing plant, is used for a batch production of asphalt concrete. The asphalt mixing plant includes a cold material system, a hot material lifting system, a vibrating screen system, and a hot aggregate bin system, and so on. The cold material system is sequentially connected to the hot material lifting system, the vibrating screen system, and the hot aggregate bin system to supply material to the hot aggregate bin system. Each hot aggregate bin in the hot aggregate bin system stores stones with different particle sizes screened out by the vibrating screen system. When the hot aggregate bin is in a full state, it will damage the vibrating screen system; and when the hot aggregate bin is in an empty state, it will cause weighing delays, thereby affecting production output. Therefore, it is necessary to frequently measure a material level in the hot aggregate bin. In the prior art, a continuous level gauge or a rotary paddle level gauge is usually set in the hot aggregate bin. A measurement signal of the continuous level gauge is easily affected by the environment, while the rotary paddle level gauge may can only measure an approximate range of the material level. A measurement accuracy and precision of both are relatively poor.

### SUMMARY

The present invention provides a material level measurement method, a material level measurement control device, and an asphalt mixing plant to solve or improve a problem of a relatively poor accuracy and precision of material level measurement in a hot aggregate bin in the prior art.

According to a first aspect of the present invention, a material level measurement method is provided, which includes following steps:
determining, based on respective feeding amounts of n cold feed bins, a consumption amount of a hot aggregate in a certain hot aggregate bin, and a measured value of a remaining amount of the hot aggregate in the certain hot aggregate bin within a first preset time, a proportion of material input from the n cold feed bins into the certain hot aggregate bin; and
determining, based on respective feeding amounts of the n cold feed bins, a consumption amount of the hot aggregate in the certain hot aggregate bin, and the proportion of the material within a second preset time, an actual value of the remaining amount of the hot aggregate in the certain hot aggregate bin;
where the measured value of the remaining amount of the hot aggregate is an amount of a remaining hot aggregate in the certain hot aggregate bin when a rotary paddle level gauge is triggered.

According to the material level measurement method provided by the present invention, the determining, based on the respective feeding amounts of the n cold feed bins, the consumption amount of the hot aggregate in the certain hot aggregate bin, and the measured value of the remaining amount of the hot aggregate in the certain hot aggregate bin within the first preset time, the proportion of material input from the n cold feed bins into the certain hot aggregate bin includes:
adjusting a feeding amount of at least one of the n cold feed bins within the first preset time to acquire at least n sets of feeding amounts of the n cold feed bins;
taking the proportion of the material input from the n cold feed bins into the certain hot aggregate bin as an unknown, and establishing at least n n-ary linear equations based on the n sets of the feeding amounts of the n cold feed bins, the consumption amount of the hot aggregate in the certain hot aggregate bin, and the measured value of the remaining amount of the hot aggregate in the certain hot aggregate bin within the first preset time; and
determining, based on the at least n n-ary linear equations, the proportion of the material input from the n cold feed bins into the certain hot aggregate bin.

According to the material level measurement method provided by the present invention, the material level measurement method further includes:
determining, based on the actual value of the remaining amount of the hot aggregate in the certain hot aggregate bin and a shape and volume of the certain hot aggregate bin, a material level of the actual value of the remaining amount of the hot aggregate in the certain hot aggregate bin.

According to the material level measurement method provided by the present invention, an outlet end of each of the cold feed bins is respectively equipped with a belt scale, and the plurality of belt scales are configured to respectively measure the respective feeding amounts of the n cold feed bins; and
an outlet end of the certain hot aggregate bin is equipped with a weighing scale, and the weighing scale is configured to measure the consumption amount of the hot aggregate in the certain hot aggregate bin.

According to the material level measurement method provided by the present invention, the material level measurement method further includes:
performing a material level verification operation based on a significant change of a material level of the actual value of the remaining amount of the hot aggregate in the certain hot aggregate bin.

According to the material level measurement method provided by the present invention, a plurality of the rotary paddle level gauges are arranged at intervals along a height direction in the certain hot aggregate bin.

Where the material level measurement method further includes:
determining that there is a significant change of the material level of the actual value of the remaining amount of the hot aggregate in the certain hot aggregate bin under a condition that the material level of the actual value of the remaining amount of the hot aggregate in the certain hot aggregate bin triggers a new one of the rotary paddle level gauges.

According to the material level measurement method provided by the present invention, the performing the material level verification operation includes:
re-adjusting a feeding amount of the at least one of the n cold feed bins for multiple times, and establishing at least n new n-ary linear equations in combination with the consumption amount of the hot aggregate in the certain hot aggregate bin, a new proportion of the material input from the n cold feed bins into the certain hot aggregate bin, and the measured value of the remaining amount of the hot aggregate in the certain hot aggregate bin;
re-determining, based on the at least n new n-ary linear equations, the new proportion of the material input from the n cold feed bins into the certain hot aggregate bin;
re-determining, based on re-adjusted feeding amounts of the n cold feed bins, the consumption amount of the hot aggregate in the certain hot aggregate bin, and the new proportion of the material input from the n cold feed bins into the certain hot aggregate bin, an actual value of the remaining amount of the hot aggregate in the certain hot aggregate bin; and
re-determining, based on a re-determined actual value of the remaining amount of the hot aggregate in the certain hot aggregate bin and the shape and volume of the certain hot aggregate bin, a material level of the actual value of the remaining amount of the hot aggregate in the certain hot aggregate bin.

According to the material level measurement method provided by the present invention, after the re-determining, based on the re-determined actual value of the remaining amount of the hot aggregate in the certain hot aggregate bin and the shape and volume of the certain hot aggregate bin, the material level of the remaining amount of the hot aggregate in the certain hot aggregate bin, the method further includes:
counter-checking a re-determined material level of the actual value of the remaining amount of the hot aggregate in the certain hot aggregate bin by using each of the rotary paddle level gauges in the certain hot aggregate bin.

According to a second aspect of the present invention, a material level measurement control device is provided, which includes:
a measurement module, configured to measure respective feeding amounts of n cold feed bins and a consumption amount of a hot aggregate in a certain hot aggregate bin; and
a control module, configured to perform the material level measurement method based on a measurement result of the measurement module.

According to a third aspect of the present invention, an asphalt mixing plant is provided to perform a material level measurement of a hot aggregate in a hot aggregate bin by using the material level measurement method as described above.

In an asphalt mixing system, it usually includes a plurality of cold feed bins, a vibrating screen system, and a plurality of hot aggregate bins. Each of the cold feed bins is capable of supplying material to different hot aggregate bins through the vibrating screen system. In the material level measurement method provided by the present invention, a material level measurement in a certain hot aggregate bin is taken as an example. That is to say, it is taken as an example that all of the cold feed bins supplies material to the certain hot aggregate bin through the vibrating screen system. The material level measurement is performed in remaining hot aggregate bins in the asphalt mixing system by using the same material level measurement method.

In the material level measurement method provided by the present invention, a total input amount of material into the certain hot aggregate bin may be obtained based on respective feeding amounts of different cold feed bins and the proportion of material input from the different cold feed bins into the certain hot aggregate bin. A sum of the consumption amount of the hot aggregate and the remaining amount of the hot aggregate in the hot aggregate bin equals the total input amount of the material. For example, a number of the cold feed bins is n. Based on this, according to the respective feeding amounts of the n cold feed bins, the consumption amount of the hot aggregate in the certain hot aggregate bin, and the measured value of the remaining amount of the hot aggregate in the certain hot aggregate bin within the first preset time, the proportion of the material input from the n cold feed bins into the certain hot aggregate bin may be determined. Where the measured value of the remaining amount of the hot aggregate is an amount of a remaining hot aggregate in the certain hot aggregate bin when the rotary paddle level gauge is triggered. After a specific value of the proportion of the material input from the n cold feed bins into the certain hot aggregate bin is obtained, an actual value of the remaining amount of the hot aggregate in the certain hot aggregate bin is determined according to the respective feeding amounts of the n cold feed bins, the consumption amount of the hot aggregate in the certain hot aggregate bin, and the proportion of the material within the second preset time.

Where during the first preset time and the second preset time, the proportion of the material input from the n cold feed bins into the certain hot aggregate bin is the same value, while the respective feeding amounts of the n cold feed bins, the consumption amount of the hot aggregate in the certain hot aggregate bin and the like may be the same or different values.

Through the configuration like this, the proportion of the material input from the n cold feed bins into the certain hot aggregate bin may be determined based on the respective feeding amounts of the n cold feed bins, the consumption amount of the hot aggregate in the certain hot aggregate bin, and the measured value of the remaining amount of the hot aggregate in the certain hot aggregate bin within the first preset time; and the actual value of the remaining amount of the hot aggregate in the certain hot aggregate bin may be determined based on the respective feeding amounts of the n cold feed bins, the consumption amount of the hot aggregate in the certain hot aggregate bin, and the proportion of the material within the second preset time. Thus, the material level of the hot aggregate bin can be measured in real-time, and an accuracy and precision of the material level measurement of the hot aggregate bin are greatly improved.

Furthermore, in the asphalt mixing plant provided by the present invention, since it measures the material level of the hot aggregate bin by using the material level measurement method as described above, it also possesses all the aforementioned advantages.

### BRIEF DESCRIPTION OF THE DRAWINGS

FIG. 1 is a flowchart of a material level measurement method provided by the present invention.
FIG. 2 is a schematic structural diagram of a portion of an asphalt mixing plant provided by the present invention.

### Reference Numerals:

100, cold feed bin; 200, hot aggregate bin; 300, belt scale; 400, conveying belt; 500, elevator; 600, vibrating screen; 700, weighing scale.

### DETAILED DESCRIPTION OF THE EMBODIMENTS

Implementation of the present invention will be further described in detail below with reference to the drawings and embodiments. Following embodiments are used to illustrate the present invention but should not be construed as limiting a scope of the present invention.

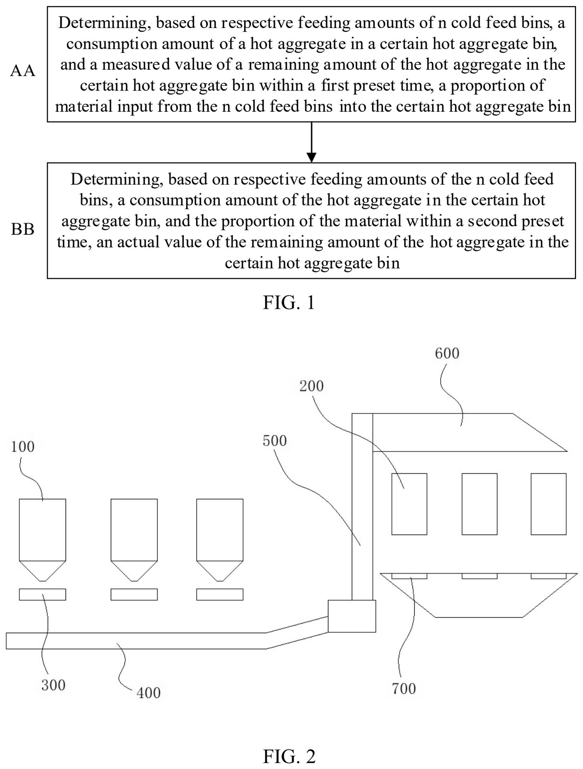

A material level measurement method, a material level measurement control device, and an asphalt mixing plant provided by embodiments of the present invention will be described below with reference to FIG. 1 and FIG. 2. It should be understood that following description is only illustrative implementations of the present invention and does not constitute any special limitation on the present invention.

An embodiment of a first aspect of the present invention provides a material level measurement method, as shown in FIG. 1 and FIG. 2, the material level measurement method includes following steps:
determining, based on a respective feeding amounts of n cold feed bins 100, a consumption amount of a hot aggregate in a certain hot aggregate bin 200, and a measured value of a remaining amount of the hot aggregate in the certain hot aggregate bin 200 within a first preset time, a proportion of material input from the n cold feed bins 100 into the certain hot aggregate bin 200; and
determining, based on a respective feeding amounts of the n cold feed bins 100, a consumption amount of the hot aggregate in the certain hot aggregate bin 200, and the proportion of the material within a second preset time, an actual value of the remaining amount of the hot aggregate in the certain hot aggregate bin 200;
where the measured value of the remaining amount of the hot aggregate is the remaining amount of the hot aggregate in the certain hot aggregate bin 100 when a rotary paddle level gauge is triggered.

In an asphalt mixing system, it usually includes a plurality of cold feed bins 100, a vibrating screen system, and a plurality of hot aggregate bins 200. Each of the cold feed bins 100 is capable of supplying material to different hot aggregate bins through the vibrating screen system. In the material level measurement method provided by the present invention, a material level measurement in the certain hot aggregate bin 200 is taken as an example. That is to say, it is taken as an example that all of the cold feed bins 100 supplies material to the certain hot aggregate bin 200 through the vibrating screen system. The material level measurement is performed in remaining hot aggregate bins 200 in the asphalt mixing system by using the same material level measurement method.

In the material level measurement method provided by the present invention, a total input amount of material into the certain hot aggregate bin 200 may be obtained based on the respective feeding amounts of different cold feed bins 100 and the proportion of material input from the different cold feed bins 100 into the certain hot aggregate bin 200. A sum of the consumption amount of the hot aggregate and the remaining amount of the hot aggregate in the hot aggregate bin 200 equals the total input amount of the material. For example, a number of the cold feed bins 100 is n. Based on this, according to the respective feeding amounts of the n cold feed bins 100, the consumption amount of the hot aggregate in the certain hot aggregate bin 200, and the measured value of the remaining amount of the hot aggregate in the certain hot aggregate bin 200 within the first preset time, the proportion of the material input from the n cold feed bins 100 into the certain hot aggregate bin 200 may be determined. Where the measured value of the remaining amount of the hot aggregate is an amount of a remaining hot aggregate in the certain hot aggregate bin 200 when the rotary paddle level gauge is triggered. After a specific value of the proportion of the material input from the n cold feed bins 100 into the certain hot aggregate bin 200 is obtained, an actual value of the remaining amount of the hot aggregate in the certain hot aggregate bin 200 is determined according to the respective feeding amounts of the n cold feed bins 100, the consumption amount of the hot aggregate in the certain hot aggregate bin 200 and the proportion of the material within the second preset time.

Where during the first preset time and the second preset time, the proportion of the material input from the n cold feed bins 100 into the certain hot aggregate bin 200 is the same value, while the respective feeding amounts of the n cold feed bins 100, the consumption amount of the hot aggregate in the certain hot aggregate bin 200 and the like may be the same or different values.

Through the configuration like this, the proportion of the material input from the n cold feed bins 100 into the certain hot aggregate bin 200 may be determined based on the respective feeding amounts of the n cold feed bins 100, the consumption amount of the hot aggregate in the certain hot aggregate bin 200, and the measured value of the remaining amount of the hot aggregate in the certain hot aggregate bin 200 within the first preset time; and, the actual value of the remaining amount of the hot aggregate in the certain hot aggregate bin 200 may be determined based on the respective feeding amounts of the n cold feed bins 100, the consumption amount of the hot aggregate in the certain hot aggregate bin 200, and the proportion of the material within the second preset time. Thus, the material level of the hot aggregate bin 200 can be measured in real time, and an accuracy and precision of the material level measurement of the hot aggregate bin 200 are greatly improved.

In an embodiment of the present invention, the determining, based on the respective feeding amounts of the n cold feed bins 100, the consumption amount of the hot aggregate in the certain hot aggregate bin 200, and the measured value of the remaining amount of the hot aggregate in the certain hot aggregate bin 200 within the first preset time, the proportion of the material input from the n cold feed bins 100 into the certain hot aggregate bin 200, specifically includes:
adjusting a feeding amount of at least one of the n cold feed bins 100 within the first preset time to acquire at least n sets of feeding amounts of the n cold feed bins 100;
taking the proportion of the material input from the n cold feed bins 100 into the certain hot aggregate bin 200 as an unknown, and establishing at least n n-ary linear equations based on the n sets of the feeding amounts of the n cold feed bins, the consumption amount of the hot aggregate in the certain hot aggregate bin 200, and the measured value of the remaining amount of the hot aggregate in the certain hot aggregate bin 200 within the first preset time; and
determining, based on the at least n n-ary linear equations, the proportion of the material input from the n cold feed bins 100 into the certain hot aggregate bin 200.

In an embodiment provided by the present invention, the material level measurement method further includes:
determining, based on the actual value of the remaining amount of the hot aggregate in the certain hot aggregate bin 200 and a shape and volume of the certain hot aggregate bin 200, a material level of the actual value of the remaining amount of the hot aggregate in the certain hot aggregate bin 200.

For example, as shown in FIG. 2, in this embodiment, the asphalt mixing plant is provided with three cold feed bins 100 and three hot aggregate bins 200. A conveying belt 400 is arranged at a bottom of each cold feed bin 100 to convey the material from each cold feed bin 100 to an elevator 500. The elevator 500 can lift the material into a vibrating screen 600. The vibrating screen 600 screens the material and subsequently conveys materials with different particle sizes to the respective hot aggregate bins 200. Taking a material level measurement of a second hot aggregate in one hot aggregate bin 200 as an example, the three cold feed bins 100 are respectively a first cold feed bin, a second cold feed bin, and a third cold feed bin. The hot aggregate bin 200 is a first hot aggregate bin, and a hot aggregate type in the first hot aggregate bin is A. A consumption amount of hot aggregate in the first hot aggregate bin is B. A measured value of a remaining amount of the hot aggregate in the first hot aggregate bin is C1. A feeding amount of the first cold feed bin is X, and a proportion of the hot aggregate A therein is a1; a feeding amount of the second cold feed bin is Y, and a proportion of the hot aggregate A therein is a2; and a feeding amount of the third cold feed bin is Z, and a proportion of the hot aggregate A therein is a3. Thus, the following equation is derived: Xa1 + Ya2 + Za3 = B + C1. Where X, Y, Z, B, and C1 are all measured values, where C1 being the measured value when the rotary paddle level gauge is triggered. That is to say, the above equation contains three unknowns, making it a ternary linear equation. Based on different feeding states, three ternary linear equations are established. Based on these three ternary linear equations, specific values of a1: a2: a3 are determined. The actual value of the remaining amount of the hot aggregate in the first hot aggregate bin is C2. After the specific values of a1: a2: a3 are determined, a specific value of the actual value of the remaining amount of the hot aggregate C2 in the first hot aggregate bin is derived based on the equation Xa1 + Ya2 + Za3 = B + C2.

The actual value of the remaining amount of the hot aggregate C2 is a weight value. After the specific value of the actual value of the remaining amount of the hot aggregate C2 is obtained, a material level of the actual value of the remaining amount of the hot aggregate in the hot aggregate bin 200 is determined based on a particle size of the hot aggregate A in the hot aggregate bin 200, and a shape and dimensions of the hot aggregate bin 200. For example, the hot aggregate bin 200 is a cylindrical structure. The material level corresponding to the actual value of the remaining amount of the hot aggregate in the hot aggregate bin 200 is calculated based on the particle size of the hot aggregate A, the actual value of the remaining amount of the hot aggregate C2, and a base area of the hot aggregate bin 200 with a cylindrical structure.

In an embodiment of the present invention, an outlet end of each of the cold feed bins 100 is respectively equipped with a belt scale 300. The plurality of belt scales 300 are configured to respectively measure the respective feeding amounts of the n cold feed bins 100.

An outlet end of the certain hot aggregate bin 200 is equipped with a weighing scale 700, and the weighing scale 700 is configured to measure the consumption amount of the hot aggregate in the certain hot aggregate bin 200.

As shown in FIG. 2, a first belt scale 300 is disposed at an outlet end of a first cold feed bin, a second belt scale 300 is disposed at an outlet end of a second cold feed bin, and a third belt scale 300 is disposed at an outlet end of a third cold feed bin. A conveying belt 400 is arranged below the first, the second, and the third belt scales 300, which conveys material falling from the first, the second, and the third belt scales 300 to the elevator 500. The first belt scale 300 can measure a feeding amount of the first cold feed bin, the second belt scale 300 can measure a feeding amount of the second cold feed bin, and the third belt scale 300 can measure a feeding amount of the third cold feed bin. A weighing scale 700 is respectively equipped at the outlet end of each of the hot aggregate bins 200. Each weighing scale 700 is used to measure a consumption amount of hot aggregate in a corresponding hot aggregate bin 200. For example, a first weighing scale is disposed at an outlet end of the first hot aggregate bin, and the first weighing scale can measure a consumption amount of hot aggregate in the first hot aggregate bin. Based on above measurement parameters, and combined with a relationship between the measurement parameters and a proportion of the material input from the first, the second, and the third cold feed bins into the first hot aggregate bin, and a remaining amount of the hot aggregate in the first hot aggregate bin, a corresponding equation is established. Thereby, the remaining amount of the hot aggregate in the first hot aggregate bin can be derived.

For example, the asphalt mixing plant includes three cold feed bins 100, which are respectively a first cold feed bin, a second cold feed bin, and a third cold feed bin. The first, the second, and the third cold feed bins supply material to the plurality of hot aggregate bins 200 in the asphalt mixing plant, and taking a material level measure of the hot aggregate in the first hot aggregate bin as an example. A hot aggregate type in the first hot aggregate bin is A. A measurement value of the weighing scale 700 is B. A measured value of the remaining amount of the hot aggregate in the first hot aggregate bin is C1. An actual value of the remaining amount of the hot aggregate in the first hot aggregate bin is C2. A measured value of the first belt scale 300 is X; a measured value of the second belt scale 300 is Y; and a measured value of the third belt scale 300 is Z. A weight ratio of the hot aggregate A originating from the first cold feed bin, the second cold feed bin, and the third cold feed bin is a1:a2:a3.

A feeding amount of the first cold feed bin, and/or a feeding amount of the second cold feed bin, and/or a feeding amount of the third cold feed bin is adjusted at least three times to acquire three different ternary linear equations. Based on these three different ternary linear equations, the weight ratio of the hot aggregate A originating from the first cold feed bin, the second cold feed bin, and the third cold feed bin is determined as a1:a2:a3.

In an embodiment of the present invention, the material level measurement method also includes:
performing a material level verification operation based on a significant change of a material level of the actual value of the remaining amount of the hot aggregate in the certain hot aggregate bin 200.

Further, in an embodiment of the present invention, a plurality of the rotary paddle level gauges are arranged at intervals along a height direction in the certain hot aggregate bin 200.

The material level measurement method further includes:
determining that there is a significant change of the material level of the actual value of the remaining amount of the hot aggregate in the certain hot aggregate bin 200 under a condition that the material level of the actual value of the remaining amount of the hot aggregate in the certain hot aggregate bin triggers a new one of the rotary paddle level gauges.

Furthermore, in an embodiment of the present invention, the performing the material level verification operation specifically includes:
re-adjusting a feeding amount of the at least one of the n cold feed bins for multiple times, and establishing at least n new n-ary linear equations in combination with the consumption amount of the hot aggregate in the certain hot aggregate bin 200, a new proportion of the material input from different cold feed bins 100 into the certain hot aggregate bin 200, and the measured value of the remaining amount of the hot aggregate in the certain hot aggregate bin 200;
re-determining, based on the at least n new n-ary linear equations, the new proportion of the material input from the n cold feed bins 100 into the certain hot aggregate bin 200;
re-determining, based on re-adjusted feeding amounts of the n cold feed bins 100, the consumption amount of the hot aggregate in the certain hot aggregate bin 200, and the new proportion of the material input from the n cold feed bins 100 into the certain hot aggregate bin 200, an actual value of the remaining amount of the hot aggregate in the certain hot aggregate bin 200;
re-determining, based on a re-determined actual value of the remaining amount of the hot aggregate in the certain hot aggregate bin 200 and the shape and volume of the certain hot aggregate bin 200, a material level of the actual value of the remaining amount of the hot aggregate in the certain hot aggregate bin 200.

Specifically, the plurality of rotary paddle level gauges are arranged at intervals along the height direction inside the hot aggregate bin 200. The plurality of rotary paddle level gauges are capable of detecting an approximate range of a material level height of the hot aggregate bin 200. For example, a state of the hot aggregate in the hot aggregate bin 200 suddenly jumps from triggering one rotary paddle level gauge to triggering another rotary paddle level gauge. At this time, it is indicated that the material level of the hot aggregate bin 200 has suddenly undergone significant changes. In this state, it is necessary to check whether the changes of the material level in the hot aggregate bin 200 are normal. The verification steps are: re-establishing multiple new different n-ary linear equations. Specifically, for example, the feeding amount of the first cold feed bin, and/or the feeding amount of the second cold feed bin, and/or the feeding amount of the third cold feed bin is re-adjusted at least three times to acquire three new different ternary linear equations. A new value of the weight ratio a1:a2:a3 of the hot aggregate A originating from the first cold feed bin, the second cold feed bin, and the third cold feed bin under a current state is determined based on the three new different ternary linear equations. An actual value of the remaining amount of the hot aggregate in the certain hot aggregate bin 200 is re-determined based on the re-adjusted feeding amounts of the n cold feed bins 100, the consumption amount of the hot aggregate in the certain hot aggregate bin 200, and the new proportion of the material input from the n cold feed bins 100 into the certain hot aggregate bin 200.

The material level of the actual value of the remaining amount of the hot aggregate in the first hot aggregate bin under the current state is re-determined based on the re-determined actual value of the remaining amount of the hot aggregate in the first hot aggregate bin, a particle size of the hot aggregate in the first hot aggregate bin, and a shape and volume of the first hot aggregate bin.

In addition, in an embodiment of the present invention, after the re-determining, based on the re-determined actual value of the remaining amount of the hot aggregate in the certain hot aggregate bin 200 and the shape and volume of the certain hot aggregate bin 200, the material level of the actual value of the remaining amount of the hot aggregate in the certain hot aggregate bin 200, it further includes:
counter-checking a re-determined material level of the second remaining amount of the hot aggregate in the certain hot aggregate bin 200 by using each of the rotary paddle level gauges in the certain hot aggregate bin 200.

For example, when a material level value of the hot aggregate in the first hot aggregate bin is recalculated, it is checked whether the material level value of the hot aggregate is within a detection range of the material level height of the rotary paddle level gauge currently in a triggered state. If it is within the detection range of the material level height of the rotary paddle level gauge, it indicates that a calculated value of the material level height is basically consistent with a detected value, and then a calculated material level value of the hot aggregate in the first hot aggregate bin is reported as the material level value of the first hot aggregate bin. If it is outside the detection range of the material level height of the rotary paddle level gauge, it indicates that there is an error between the calculated value and the detected value of the material level height, and a trigger endpoint value of a new rotary paddle level gauge is reported as the material level value of the first hot aggregate bin when the new rotary paddle level gauge is triggered next time. Thus, an accuracy of the material level measurement is further improved.

A second aspect of the present invention provides a material level measurement control device, which includes:
a measurement module, configured to measure respective feeding amounts of n cold feed bins 100 and a consumption amount of a hot aggregate in a certain hot aggregate bin 200; and
a control module, configured to perform the aforementioned material level measurement method based on a measurement result of the detection module.

For example, the measurement module includes belt scales 300 for measuring the respective feeding amounts of the cold feed bins 100 and a weighing scale 700 for measuring the consumption amount of the hot aggregate in the hot aggregate bin 200. The control module is capable of performing the aforementioned material level measurement method based on the measurement result of the measurement module. For example, the control module may receive a corresponding measurement data, establish corresponding multivariate linear equations, calculate a proportion of material based on the aforementioned multivariate linear equations, and calculate a remaining amount of the hot aggregate in a corresponding hot aggregate bin 200 based on the proportion of material. In addition, the control module may also calculate a current material level of the hot aggregate based on a particle size of the hot aggregate, a shape and dimensions of the hot aggregate bin 200, and an actual value of the remaining amount of the hot aggregate in the hot aggregate bin 200.

An embodiment of a third aspect of the present invention also provides an asphalt mixing plant, which includes the aforementioned material level measurement control device, or performs a material level measurement of a hot aggregate in a hot aggregate bin 200 by using the aforementioned material level measurement method.

Furthermore, in the asphalt mixing plant provided by the present invention, since material level measurement of the hot aggregate in the hot aggregate bin 200 is performed by using the aforementioned material level measurement method, it also possesses all the aforementioned advantages.

## Claims

1. A material level measurement method, comprising:
determining, based on respective feeding amounts of n cold feed bins, a consumption amount of a hot aggregate in a certain hot aggregate bin, and a measured value of a remaining amount of the hot aggregate in the certain hot aggregate bin within a first preset time, a proportion of material input from the n cold feed bins into the certain hot aggregate bin; and
determining, based on respective feeding amounts of the n cold feed bins, a consumption amount of the hot aggregate in the certain hot aggregate bin, and the proportion of the material within a second preset time, an actual value of the remaining amount of the hot aggregate in the certain hot aggregate bin;
wherein the measured value of the remaining amount of the hot aggregate is an amount of a remaining hot aggregate in the certain hot aggregate bin when a rotary paddle level gauge is triggered.

2. The material level measurement method according to claim 1, wherein the determining, based on the respective feeding amounts of the n cold feed bins, the consumption amount of the hot aggregate in the certain hot aggregate bin, and the measured value of the remaining amount of the hot aggregate in the certain hot aggregate bin within the first preset time, the proportion of the material input from the n cold feed bins into the certain hot aggregate bin comprises:
adjusting a feeding amount of at least one of the n cold feed bins within the first preset time to acquire at least n sets of feeding amounts of the n cold feed bins;
taking the proportion of the material input from the n cold feed bins into the certain hot aggregate bin as an unknown, and establishing at least n n-ary linear equations based on the n sets of the feeding amounts of the n cold feed bins, the consumption amount of the hot aggregate in the certain hot aggregate bin, and the measured value of the remaining amount of the hot aggregate in the certain hot aggregate bin within the first preset time; and
determining, based on the at least n n-ary linear equations, the proportion of the material input from the n cold feed bins into the certain hot aggregate bin.

3. The material level measurement method according to claim 1, further comprising:
determining, based on the actual value of the remaining amount of the hot aggregate in the certain hot aggregate bin and a shape and volume of the certain hot aggregate bin, a material level of the actual value of the remaining amount of the hot aggregate in the certain hot aggregate bin.

4. The material level measurement method according to claim 3, wherein an outlet end of each of the cold feed bins is respectively equipped with a belt scale, and the plurality of belt scales are configured to respectively measure the respective feeding amounts of the n cold feed bins; and
an outlet end of the certain hot aggregate bin is equipped with a weighing scale, and the weighing scale is configured to measure the consumption amount of the hot aggregate in the certain hot aggregate bin.

5. The material level measurement method according to any one of claims 1 to 4, further comprising:
performing a material level verification operation based on a significant change of a material level of the actual value of the remaining amount of the hot aggregate in the certain hot aggregate bin.

6. The material level measurement method according to claim 5, wherein a plurality of the rotary paddle level gauges are arranged at intervals along a height direction in the certain hot aggregate bin, wherein
the material level measurement method further comprises:
determining that there is a significant change of the material level of the actual value of the remaining amount of the hot aggregate in the certain hot aggregate bin under a condition that the material level of the actual value of the remaining amount of the hot aggregate in the certain hot aggregate bin triggers a new one of the rotary paddle level gauges.

7. The material level measurement method according to claim 6, wherein the performing the material level verification operation comprises:
re-adjusting a feeding amount of the at least one of the n cold feed bins for multiple times, and establishing at least n new n-ary linear equations in combination with the consumption amount of the hot aggregate in the certain hot aggregate bin, a new proportion of the material input from the n cold feed bins into the certain hot aggregate bin, and the measured value of the remaining amount of the hot aggregate in the certain hot aggregate bin;
re-determining, based on the at least n new n-ary linear equations, the new proportion of the material input from the n cold feed bins into the certain hot aggregate bin;
re-determining, based on re-adjusted feeding amounts of the n cold feed bins, the consumption amount of the hot aggregate in the certain hot aggregate bin, and the new proportion of the material input from the n cold feed bins into the certain hot aggregate bin, an actual value of the remaining amount of the hot aggregate in the certain hot aggregate bin; and
re-determining, based on a re-determined actual value of the remaining amount of the hot aggregate in the certain hot aggregate bin and the shape and volume of the certain hot aggregate bin, a material level of the actual value of the remaining amount of the hot aggregate in the certain hot aggregate bin.

8. The material level measurement method according to claim 7, wherein after the re-determining, based on the re-determined actual value of the remaining amount of the hot aggregate in the certain hot aggregate bin and the shape and volume of the certain hot aggregate bin, the material level of the remaining amount of the hot aggregate in the certain hot aggregate bin, the method further comprises:
counter-checking a re-determined material level of the actual value of the remaining amount of the hot aggregate in the certain hot aggregate bin by using each of the rotary paddle level gauges in the certain hot aggregate bin.

9. A material level measurement control device, comprising:
a measurement module, configured to measure respective feeding amounts of n cold feed bins and a consumption amount of a hot aggregate in a certain hot aggregate bin; and
a control module, configured to perform the material level measurement method according to any one of claims 1 to 8 based on a measurement result of the measurement module.

10. An asphalt mixing plant, comprising the material level measurement control device according to claim 9, or performing a material level measurement of a hot aggregate in a hot aggregate bin by using the material level measurement method according to any one of claims 1 to 8.
